# EUROPÄISCHE PATENTSCHRIFT

(11) **EP 2 836 724 B1**
(45) Veröffentlichungstag und Bekanntmachung des Hinweises auf die Patenterteilung: **23.08.2017**
(21) Anmeldenummer: 13709779.6
(22) Anmeldetag: 14.03.2013
(51) Int. Cl.: F15B 19/00

(54) **FLUIDSYSTEM UND VERFAHREN ZUM BETREIBEN EINES FLUIDSYSTEMS**
FLUID SYSTEM AND METHOD OF CONTROLLING A FLUID SYSTEM
SYSTÈME FLUIDIQUE ET MÉTODE

(30) Priorität: 15.03.2012 DE 102012005224
(43) Veröffentlichungstag der Anmeldung: 18.02.2015
(73) Patentinhaber: Festo AG & Co. KG, 73734 Esslingen (DE)
(72) Erfinder: GEHRKE, Martin, 71384 Weinstadt (DE); BORK, Tilmann, 12623 Berlin (DE); DEICHERT, Helmut, 71336 Waiblingen (DE)
(74) Vertreter: Patentanwälte Magenbauer & Kollegen Partnerschaft mbB
(86) Internationale Anmeldenummer: PCT/EP2013/000762
(87) Internationale Veröffentlichungsnummer: WO 2013/135382

(56) Entgegenhaltungen:
- EP-A2- 1 061 269
- WO-A1-01/59307
- WO-A1-2005/111433

## Beschreibung

Die Erfindung betrifft ein Fluidsystem zum sicheren Betreiben eines fluidisch ansteuerbaren Aktors, mit einer Steuereinrichtung zur Bereitstellung von Steuersignalen an eine Ventilsteuerung, mit einer Ventilsteuerung zur Ansteuerung von Fluidsteuerventilen, mit Fluidsteuerventilen, die elektrisch mit der Ventilsteuerung verbunden sind und die zur Beeinflussung von Fluidströmen an wenigstens einen Aktor ausgebildet sind, mit Sensormitteln, die zur Ermittlung eines Aktorzustands, insbesondere einer Aktorstellung, und zur Ausgabe von Sensorsignalen entsprechend dem ermittelten Aktorzustand ausgebildet sind, sowie mit einer Überwachungseinrichtung, die zur Verarbeitung der Sensorsignale und zur Bereitstellung eines Überwachungssignals an die Ventilsteuerung ausgebildet ist.

Aus der EP1061269 A2 ist eine Fehlererkennungs-Einrichtung zum Erkennen eines Fehlverhaltens von Stellantrieben mit einem einen beweglichen Kolben aufweisenden Aktuator, mit einem mit diesem über Hydraulik-Leitungen in Verbindung stehenden Servoventil, mit einer Fehlererkennungs-Einrichtung und mit einer Steuer-Elektronik zur Abgabe eines Sollwerts zur Steuerung des Servoventils bekannt. Dabei ist vorgesehen, dass die Steuerstellung des Servoventils die Laufrichtung und Laufgeschwindigkeit des Kolbens bestimmt, wobei ein erster Sensor zur Ermittlung der Steuerstellung des Servoventils und ein zweiter Sensor zur Ermittlung der Position des Kolbens im Aktuatorgehäuse vorgesehen sind und die Steuerstellung und die Kolben-Position an die Steuer-Elektronik übertragen werden. Die Fehlererkennungs-Einrichtung steht mit den Sensoren in Verbindung, wobei aus den Signalen des zweiten Sensors die tatsächliche Laufgeschwindigkeit und die Laufrichtung des Aktuator-Kolbens ermittelt werden und wobei zur Fehlererkennung aus dem Sollwert für die Steuerstellung des Servoventils ein Soll-Betrag für die Laufgeschwindigkeit und für die Laufrichtung des Aktuator-Kolbens ermittelt wird und wobei diese mit der aus den Signalen des zweiten Sensors ermittelten Laufgeschwindigkeit und Laufrichtung des Aktuator-Kolbens in Beziehung gesetzt wird und bei Abweichung über einen Schwellwert hinaus eine Fehlermeldung abgegeben wird.

Aus der WO 2005/111433 A1 ist ein Verfahren zur Fehlereingrenzung und Diagnose an einer fluidischen Anlage bekannt, wobei ein Fluidverbrauch wenigstens eines Bereichs der Anlage erfasst und betriebszyklusabhängig mit einem entsprechenden gespeicherten Referenzverbrauch verglichen wird, wobei jeweils zum Zeitpunkt einer Verbrauchs-Abweichung oder bei ständiger Verbrauchs-Abweichung zum Zeitpunkt einer Beendigung der Verbrauchs-Abweichung festgestellt wird, bei welchem System und/oder Subsystem der Anlage zu diesem Zeitpunkt ein den Fluidverbrauch beeinflussender Vorgang stattgefunden hat, und wobei dieses System und/oder Subsystem da durch als fehlerbehaftet erkannt wird.

Die EP1266147 A1 offenbart ein fluidtechnisches System mit Sicherheitsfunktion zur sicherheitsorientierten Steuerung zumindest eines fluidtechnischen Aktors, mit zumindest einer lokalen Steuerungseinrichtung zur Steuerung des fluidtechnischen Aktors über Steuermittel des fluidtechnischen Systems, wobei zumindest ein Sensor zur Übermittlung zumindest einer Information über zumindest einen Betriebszustand des fluidtechnischen Systems an die lokale Steuerungseinrichtung vorgesehen ist und wobei die lokale Steuerungseinrichtung derart ausgestaltet ist, dass sie zumindest eine Information zur Ermittlung zumindest eines sicherheitskritischen Zustandes auswerten kann und dass sie bei Vorliegen des zumindest einen sicherheitskritischen Zustandes zumindest eine vorbestimmte Folgeaktion ausführt.

Die Aufgabe der Erfindung besteht darin, ein Fluidsystem sowie ein Verfahren zum Betreiben eines Fluidsystems bereitzustellen, die einen vorteilhaften Kompromiss zwischen einer Erfüllung hoher Sicherheitsanforderungen und einem unterbrechungsfreien Betrieb gewährleisten.

Diese Aufgabe wird für ein Fluidsystem der eingangs genannten Art mit den Merkmalen des Anspruchs 1 gelöst. Hierbei ist vorgesehen, dass die Steuereinrichtung gemäß einer ersten Sicherheitskategorie eines Sicherheitsstandards ausgebildet ist und dass die Ventilsteuerung, die Fluidsteuerventile, die Sensormittel und die Überwachungseinrichtung ein sicheres Arbeitssystem bilden und gemäß einer zweiten Sicherheitskategorie des Sicherheitsstandards ausgebildet sind, wobei die zweite Sicherheitskategorie auf einem höheren Niveau als die erste Sicherheitskategorie innerhalb des Sicherheitsstandards angesiedelt ist.

Als Sicherheitsstandards stehen beispielsweise nationale oder internationale Normen zur Verfügung, in denen beispielsweise die Anforderungen an die Zuverlässigkeit und/oder an ein definiertes Verhalten der jeweiligen Komponenten im Fehlerfall festgelegt sind und in denen die Betriebssicherheit bzw. Ausfallsicherheit der Komponenten üblicherweise in klar voneinander abgrenzbaren Sicherheitsklassen oder Sicherheitskategorien eingeordnet ist. Typischerweise muss eine Komponente, die einer bestimmten Sicherheitskategorie eines Sicherheitsstandards zugeordnet werden soll, durch den Hersteller und/oder durch ein unabhängiges Prüfinstitut daraufhin untersucht und gegebenenfalls zertifiziert werden, ob sie sämtliche Anforderungen der jeweiligen Sicherheitskategorie erfüllt.

Die Auslegung von Komponenten eines Fluidsystems auf die Anforderungen der jeweils angestrebten Sicherheitskategorie kann bei der Konstruktion, bei der Herstellung und gegebenenfalls auch bei der Integration der Komponenten in das jeweilige Arbeitssystem einen erheblichen Aufwand bedeuten und damit die Herstellungskosten für das jeweilige Fluidsystem beeinträchtigen. Somit ist es zweckmäßig, eine möglichst geringe Zahl von Komponenten des Fluidsystems gemäß einer hohen Sicherheitskategorie eines Sicherheitsstandards auszubilden, während die übrigen Komponenten des Fluidsystems gemäß niedrigeren Sicherheitskategorien ausgebildet sind. Praktisch kann dies beispielsweise bedeuten, dass die Komponenten, die der höheren Sicherheitskategorie zuzurechnen sind, eine geringere Ausfallwahrscheinlichkeit aufweisen als die Komponenten, die der niedrigeren Sicherheitskategorie zuzurechnen sind.

Erfindungsgemäß ist die Systemgrenze für das sichere Arbeitssystem um die Gruppe von Komponenten des Fluidsystems, die gemäß einer gemeinsamen, hohen Sicherheitskategorie ausgebildet sind, eng gezogen, um die Anzahl der Komponenten im sicheren Arbeitssystem und damit die Kosten für das sichere Arbeitssystem gering zu halten.

Erfindungsgemäß ist die Steuereinrichtung, die die Abläufe innerhalb des Fluidsystems steuert und gegebenenfalls zumindest teilweise regelt und die einen komplexen Aufbau aufweist, nicht Bestandteil des sicheren Arbeitssystems, da jede Auslegung einer Steuereinrichtung auf die jeweils nächsthöhere Sicherheitskategorie einen erheblichen Mehraufwand bedeutet. Vielmehr sind bei den erfindungsgemäßen Fluidsystem nur diejenigen Komponenten der gegenüber der Steuereinrichtung höheren Sicherheitskategorie zugeordnet, die unmittelbar mit der Beeinflussung der Fluidzufuhr an den Aktor befasst sind oder die zur Überwachung der für die Fluidzufuhr notwendigen Komponenten vorgesehen sind, also insbesondere die Überwachungseinrichtung.

Mit Hilfe des sicheren Arbeitssystems, das die Komponenten Ventilsteuerung, Fluidsteuerventile, Sensormittel und Überwachungseinrichtung umfasst, kann beispielsweise ein als fluidischer Arbeitszylinder ausgebildeter Aktor sicher angesteuert und dabei überwacht werden. Bei einer exemplarischen Betriebsweise für den Arbeitszylinder, bei der dieser durch entsprechende Beaufschlagung mit druckbeaufschlagtem Fluid beispielsweise zwischen einer Einfahrposition für die Kolbenstange und einer Ausfahrposition für die Kolbenstange geschaltet wird, sind die Sensormittel als Endlagenschalter ausgebildet, die jeweils ein Sensorsignal abgeben, wenn die Kolbenstange des Aktors eine der zwei jeweils vorgegebenen Endpositionen erreicht hat. Bleibt das Sensorsignal nach Bereitstellung von fluidischer Energie an den Aktor aus oder werden zeitgleich von beiden Sensormitteln Sensorsignale ausgegeben, wird von der Überwachungseinrichtung angesichts eines vermuteten Fehlerfalls ein Überwachungssignal an die Ventilsteuerung übermittelt. Die Ventilsteuerung steuert dann die Fluidsteuerventile derart an, dass der Aktor und die damit bewegungsgekoppelten Maschinenelemente in möglichst kurzer Zeit in einen sicheren Zustand gebracht werden können. Üblicherweise wird als sicherer Zustand eine möglichst rasche Abbremsung und Stilllegung des Aktors angestrebt, um eine einen Schaden an dem Fluidsystem und der Arbeitsmaschine, in die das Fluidsystem integriert ist, sowie eventuell eine Verletzungsgefahr für den Bediener der Arbeitsmaschine durch den Aktor und die damit bewegungsgekoppelten Maschinenelemente zu minimieren.

Vorteilhafte Weiterbildungen der Erfindung sind Gegenstand der Unteransprüche.

Zweckmäßig ist es, wenn das Arbeitssystem und die Steuereinrichtung gemäß den Sicherheitskategorien aus wenigstens einem der Sicherheitsstandards IEC 61508, IEC 61511, IEC 62061, IEC 13849 ausgebildet sind.

Bei einer vorteilhaften Weiterbildung der Erfindung ist vorgesehen, dass die Überwachungseinrichtung elektrisch mit einem Sicherheitsschaltmittel verbunden ist und für eine Einbeziehung eines Sicherheitssignals des Sicherheitsschaltmittels in das Überwachungssignal ausgebildet ist, wobei das Sicherheitsschaltmittel als Zugangsbegrenzung und/oder Zugangsüberwachung zu einem vom Aktor bestimmten Gefährdungsbereich, insbesondere als Lichtgitter oder als Trittschaltmatte oder als Türkontakt einer Wartungstür in einem Sicherheitskäfig, ausgebildet ist. Mit Hilfe eines derartigen Sicherheitsschaltmittels wird angestrebt, dass bei einem Eingreifen oder Eintreten eines Benutzers in den vom Aktor bestimmten Gefährdungsbereich eine Abschaltung des Fluidsystems und damit eines Aktors, der beispielsweise einer Arbeitsmaschine integriert ist, erfolgt.

Vorzugsweise ist die Überwachungseinrichtung elektrisch mit einem Bedienerschaltmittel und/oder mit einer Sicherheitsschaltung verbunden und ist für eine Einbeziehung eines Bediensignals des Bedienerschaltmittels und/oder eines Freigabesignals der Sicherheitsschaltung in das Überwachungssignal ausgebildet, wobei das Bedienerschaltmittel als Wahlschalter für eine Betriebsart des Fluidsystems ausgebildet ist und wobei die Sicherheitsschaltung als Überwachungssystem für das Fluidsystem ausgebildet ist. Exemplarisch kann vorgesehen sein, dass mit dem Bedienerschaltmittel das Fluidsystem für den Aktor aus einem Arbeitszustand in einen Ruhezustand oder aus einem Ruhezustand in einen Arbeitszustand versetzt werden kann. Bei einer Umschaltung des Fluidsystems aus dem Arbeitszustand in den Ruhezustand kann vorgesehen werden, dass das Bedienerschaltmittel ein diesem Benutzerwunsch entsprechendes Bediensignal an die Überwachungseinrichtung bereitstellt und die Überwachungseinrichtung auf dieses Bediensignal hin ein entsprechendes Überwachungssignal an die Ventilsteuerung ausgibt. Vorzugsweise ist die Ventilsteuerung so ausgebildet, dass sie eine situationsabhängige Abschaltung des Fluidsystems durchführen kann. Sofern die Ventilsteuerung ein Überwachungssignal erhält, das auf ein Bediensignal zurückgeht, mit dem der Benutzer eine Stilllegung der Arbeitsmaschine beispielsweise für Wartungszwecke anstrebt, kann vorgesehen sein, eine Beeinflussung der Fluidzufuhr erst dann vorzunehmen, wenn der Aktor ohnehin eine Vorzugsstellung erreicht hat, aus der heraus eine Wiederinbetriebnahme der Arbeitsmaschine ohne Zusatzaufwand möglich ist. Erhält die Ventilsteuerung hingegen ein Überwachungssignal, das in Zusammenhang mit einer Fehlfunktion der Sensormittel steht oder das von einem umgangssprachlich auch als Notaus-Schalter bezeichneten, als Nothalt-Schalter ausgebildeten Bedienerschaltmittel stammt, ist eine möglichst rasche Unterbrechung einer Bewegung des Aktors sowie dessen schnelle Stilllegung gewünscht und es erfolgt eine unmittelbare Einflussnahme auf die Fluidsteuerventile und die von diesen kontrollierten Fluidströme zum Aktor. Ergänzend oder alternativ kann die Überwachungseinrichtung mit einer Sicherheitsschaltung verbunden sein, die zur Bewertung eines Gefährdungspotentials des Fluidsystems ausgebildet ist und die ein Freigabesignal ausgibt, wenn das Gefährdungspotential des Fluidsystems unterhalb eines vorgebbaren Grenzwerts liegt. Dieses Freigabesignal wird von der Überwachungseinrichtung derart mit einbezogen, dass es zumindest für den Fall, dass ein Eingriff eines Benutzers in den vom Aktor bestimmten Gefährdungsbereich zumindest dann nicht zu einer Weiterleitung eines Überwachungssignals führt, wenn keine Bewegung des Aktors stattfindet und/oder in Kürze vorgesehen ist. Somit wird vermieden, dass möglicherweise durch ein entsprechendes Überwachungssignal das Fluidsystem ohne entsprechende Notwendigkeit in einen sicheren Zustand gebracht wird, aus dem es möglicherweise nur mit einem größeren Aufwand wieder in einen Normalzustand versetzt werden kann.

Bei einer vorteilhaften Weiterbildung der Erfindung ist vorgesehen, dass die Ventilsteuerung oder das sichere Arbeitssystem dazu eingerichtet ist, die Fluidsteuerventile derart anzusteuern, dass Fluidströme an den wenigstens einen Aktor derart beeinflusst werden, dass der Aktor innerhalb einer vorgebbaren Zeitspanne in wenigstens einen vorgebbaren Funktionszustand aus der Gruppe: Aktor druckfrei; Fluidströme vom und/oder zum Aktor gestoppt; Bewegungsrichtungsvorgabe für Aktor; Aktor auf Stillstand geregelt; Aktor auf Vorgegebene Kraft geregelt; Druck im Aktor ungeregelt begrenzt; Aktorklemmung aktiviert; Bewegungsgeschwindigkeit des Aktors begrenzt; bringbar ist. Dabei können die Ventilsteuerung bzw. das sichere Arbeitssystem derart ausgebildet sein, dass sie nur einen Teil der Funktionszustände oder sämtliche Funktionszustände bewirken können, dies kann gegebenenfalls vom Benutzer durch entsprechende Parametrierung oder Programmierung der Ventilsteuerung bzw. des sicheren Arbeitssystems und/oder durch geeignete Auswahl der Ventilbauart vorgegeben werden. Dabei können die Ventilsteuerung bzw. das sichere Arbeitssystem derart konfiguriert werden, dass sie in Abhängigkeit von einem Überwachungssignal des Überwachungssystems und/oder bei Vorliegen eines Bediensignals eines Bedienerschaltmittels und/oder eines Freigabesignals einer Sicherheitsschaltung entsprechend einer gespeicherten Vorlage einen jeweiligen Funktionszustand bewirken. Die Auswahl des geeigneten Funktionszustands kann beispielsweise davon abhängig gemacht werden, ob sich aus den Überwachungssignalen, Freigabesignalen, Bediensignalen das Vorliegen eines mehr oder weniger kritischen Betriebszustands für das Fluidsystem ermitteln lässt, um in Abhängigkeit von der Schwere der ermittelten Störung eine geeignete Maßnahmen treffen, mit der die Störung möglichst folgenlos abgefangen werden kann.

Der Funktionszustand "Aktor druckfrei" für den Aktor ist ein Basiszustand und bedeutet, dass der fluidische Aktor keine Druckbeaufschlagung mehr aufweist. Dieser Zustand wird in Anlehnung an eine Abtrennung eines elektrischen Antriebs von einer elektrischen Versorgungsspannung als "safe torque off" oder "STO" bezeichnet.

Der Funktionszustand "Fluidströme vom und/oder zum Aktor gestoppt" für den Aktor ist ein Basiszustand und bedeutet, dass der Aktor innerhalb einer vorgegebenen Zeitspanne zum Stillstand kommt. Dabei ist bei entsprechender Konstruktionsweise des Aktors vorgesehen, dass durch das Schließen der Fluidsteuerventile im Aktor wenigstens eine Fluidmenge eingeschlossen wird, insbesondere alle Fluidmengen eingeschlossen werden, so dass eine Bewegung des Aktors zum Stillstand kommt und der Aktor eine Stillstandsposition hält. Dies ist beispielsweise bei einem Fluidzylinder mit zwei getrennten und von den Fluidsteuerventilen fluiddicht abgeschlossenen Arbeitsräumen der Fall. Dieser Zustand wird auch als Safe operation stop" oder "SOS" bezeichnet.

Der Funktionszustand "Bewegungsrichtungsvorgabe" für den Aktor ist ein Basiszustand und bedeutet, dass eine Fluidzufuhr an den Aktor derart vorgesehen oder aufrechterhalten wird, dass der Aktor eine Stellbewegung in eine vorgebbare Stellrichtung vollzieht, beispielsweise eine Rückzugs- oder Freigabebewegung, wie sie bei einer mit dem Aktor angetriebenen Klemmeinrichtung zur Vermeidung einer Unfallgefahr sinnvoll sein kann. Beispielsweise erfolgt bei einem Fluidzylinder mit zwei getrennten und von den Fluidsteuerventilen fluiddicht abschließbaren Arbeitsräumen zur Einnahme des Funktionszustands "Bewegungsrichtungsvorgabe" eine Aufnahme oder Weiterführung einer Fluidzufuhr in einen der Arbeitsräume, während das Fluid aus dem zweiten Arbeitsraum mittels der zugeordneten Fluidsteuerventile abgeführt wird. Durch die hieraus resultierende Druckdifferenz entsteht eine eindeutige Bewegungsrichtungsvorgabe. Dieser Funktionszustand wird auch als "Safe direction" oder "SDI" bezeichnet.

Der Funktionszustand "Aktor auf Stillstand geregelt" ist ein optionaler Funktionszustand und bedeutet, dass der Aktor eine vorgebbare Position einnimmt und hält. Beispielsweise kann vorgesehen sein, dass der Aktor hierzu aus einer Bewegung abgebremst wird und bei Erreichen des Stillstands in der Stillstandsposition gehalten wird. Alternativ kann vorgesehen sein, dass der Aktor aus dem Stillstand oder aus einer Bewegung in eine vorgegebene Position verfahren wird. Dieser Funktionszustand wird auch als "Safe balanced torque" oder "SBT" bezeichnet. Sofern sich dieser Funktionszustand nicht innerhalb einer vorgebbaren Zeitspanne einstellen lässt, wird der Aktor in einen der Basiszustände, insbesondere in den Funktionszustand "Aktor druckfrei" überführt.

Der Funktionszustand "Aktor auf vorgegebene Kraft geregelt" ist ein optionaler Funktionszustand und bedeutet, dass der Druck in wenigstens einem Arbeitsraum des Aktors so geregelt wird, dass der Aktor eine auf ein vorgebbares Kraftniveau begrenzte Kraft oder ein vorgegebenes Moment abgeben kann. Dieser Funktionszustand wird auch als "Safe limited torque" oder "SLT" bezeichnet. Dieser Funktionszustand ist beispielsweise dann von Interesse, wenn der Aktor zur Bewegung eines Greifers oder einer Einspanneinrichtung dient und im Fehlerfall sichergestellt werden soll, dass ein zu diesem Zeitpunkt bereits gegriffener oder eingespannter Gegenstand nicht freigegeben wird, wie dies beispielsweise im Funktionszustand "Aktor druckfrei" der Fall wäre. Sofern sich der Funktionszustand "Aktor auf Vorgegebene Kraft geregelt" nicht innerhalb einer vorgebbaren Zeitspanne einstellen lässt, wird der Aktor in einen der Basiszustände, insbesondere in den Funktionszustand "Fluidströme vom und/oder zum Aktor gestoppt" überführt.

Der Funktionszustand "Druck im Aktor ungeregelt begrenzt" ist ein optionaler Funktionszustand und bedeutet, dass eine Druckbeaufschlagung des Aktors auf einen vorgebebenen Druckwert erfolgt, ohne dass dieser Druckwert auf ein Vorliegen von Abweichungen hin überwacht wird oder eine Nachführung der Druckbeaufschlagung erfolgt. Dieser Funktionszustand wird auch als "Safe torque range" oder "SLR" bezeichnet. Sofern sich dieser Funktionszustand nicht innerhalb einer vorgebbaren Zeitspanne einstellen lässt, wird der Aktor in einen der Basiszustände, insbesondere in den Funktionszustand "Aktor druckfrei" überführt.

Der Funktionszustand "Aktorklemmung aktiviert" ist ein optionaler Funktionszustand und bedeutet, dass eine dem Aktor zugeordnete Klemmung, beispielsweise eine durch Federkraft betätigte Bremse, welche pneumatisch oder elektromechanisch geöffnet wird, aktiviert wird, um eine Bewegung des Aktors abzubremsen und/oder um einen stillstehenden Aktor in seiner Stillstandsposition zu halten. Dies ist eine Ergänzung zum den Basiszustand "Aktor druckfrei".

Der Funktionszustand "Bewegungsgeschwindigkeit des Aktors begrenzt" ist ein optionaler Funktionszustand und bedeutet, dass der Aktor durch geeignete Ansteuerung der Fluidsteuerventile eine geschwindigkeitsbegrenzte Bewegung aufnimmt oder weiterführt. Dieser Funktionszustand wird auch als "Safe limited speed" oder "SLS" bezeichnet. Sofern sich dieser Funktionszustand nicht innerhalb einer vorgebbaren Zeitspanne einstellen lässt, wird der Aktor in einen der Basiszustände, insbesondere in den Funktionszustand "Aktor druckfrei" überführt.

In weiterer Ausgestaltung der Erfindung ist vorgesehen, dass die Ventilsteuerung oder das sichere Arbeitssystem dazu eingerichtet ist, eine zeitliche Abfolge von wenigstens zwei Funktionszuständen vorzugeben. Dadurch kann erreicht werden, dass der Aktor zunächst eine Bewegung vollzieht oder weiterführt, um anschließend nach Erreichen einer vorgebbaren Position beispielsweise festgelegt zu werden.

Bei einer ersten Variante, die auch als "sicherer Halt / Typ 1" oder "safe stop 1" oder "SS1" bezeichnet wird, erfolgt zunächst eine Überführung des Aktors in den Funktionszustand "Fluidströme vom und/oder zum Aktor gestoppt" oder "SOS" bis der Aktor stillsteht, um dann in einem weiteren Schritt eine Überführung des Aktors in den Funktionszustand "Aktor drucklos" oder "STO" vorzunehmen.

Bei einer zweiten Variante, die auch als "sichere Endposition" oder "safe end position" oder "SEP" bezeichnet wird, erfolgt zunächst eine Überführung des Aktors in den Funktionszustand "Bewegungsrichtungsvorgabe" oder "SDI", bis der Aktor eine Endlage erreicht hat, um dann in einem weiteren Schritt eine Überführung des Aktors in den Funktionszustand "Aktor drucklos" oder "STO" vorzunehmen.

Bei einer dritten Variante, die auch als "sichere Rückzugsposition" oder "safe retracting" oder "SRT" bezeichnet wird, erfolgt zunächst eine Überführung des Aktors in den Funktionszustand "Bewegungsrichtungsvorgabe" oder "SDI", bis der Aktor eine Rückzugsposition erreicht hat, um dann in einem weiteren Schritt eine Überführung des Aktors in den Funktionszustand "Fluidströme vom und/oder zum Aktor gestoppt" oder "SOS" vorzunehmen.

Vorteilhaft ist es, wenn die Steuereinrichtung elektrisch mit dem Sicherheitsschaltmittel und/oder mit dem Bedienerschaltmittel verbunden ist und für eine Einbeziehung eines Signals des Sicherheitsschaltmittels und/oder des Bedienerschaltmittels bei der Erzeugung von Steuerbefehlen an Arbeitsventile, die mit dem Aktor verbunden sind und/oder an die Ventilsteuerung ausgebildet ist. Hierdurch erhält die Steuerungseinrichtung Informationen über erfolgte Eingriffe des Sicherheitsschaltmittels. Weiterhin kann hierdurch ein Eingreifen der Überwachungseinrichtung und der Ventilsteuerung je nach Arbeitssituation des Fluidsystems und des Aktors vermieden werden, das möglicherweise zu einem Stillstand des Aktors in einer ungünstigen Position führen könnte. Dieses Eingreifen der Überwachungseinrichtung und der Ventilsteuerung wird vorzugsweise dadurch verhindert, dass die Signale des Sicherheitsschaltmittels und/oder des Bedienerschaltmittels bereits bei der Erzeugung von Steuerbefehlen durch die Steuereinrichtung berücksichtigt werden und somit möglicherweise eine Ansteuerung des Aktors, die gemäß einem in der Steuereinrichtung gespeicherten Programm vorzunehmen wäre, nicht oder zu einem späteren Zeitpunkt erfolgt. Hierbei ist insbesondere von Bedeutung, dass die Steuereinrichtung möglicherweise zur Ansteuerung mehrerer Aktoren vorgesehen ist und bei Vorliegen eines Signals des Sicherheitsschaltmittels und/oder des Bedienerschaltmittels eine koordinierte Unterbrechung weiterer Bewegungsabläufe der Aktoren vorsehen kann.

Bevorzugt sind die Fluidsteuerventile für eine Fluidsteuerung des Aktors als Schaltventile zwischen eine Fluidquelle und den Aktor einschleifbar oder sind stromauf oder stromab von Arbeitsventilen, die von der Steuereinrichtung ansteuerbar sind, als Sperrventile zwischen die Fluidquelle und den Aktor einschleifbar, um eine Stellbewegung eines Stellglieds des Aktors in eine vorgebbare Schaltstellung oder einen Verbleib des Stellglieds des Aktors in der vorgebbaren Schaltstellung zu gewährleisten.

Bei einer ersten Ausführungsform ist vorgesehen, dass ausschließlich Fluidsteuerventile für die Beeinflussung der Fluidströme zum Aktor während des Betriebszustands vorgesehen sind und entsprechend den Vorgaben der Steuereinrichtung und der nachgeschaltet angeordneten Ventilsteuerung zwischen unterschiedlichen Funktionsstellungen, insbesondere zwischen einer Öffnungsstellung und einer Schließstellung, geschaltet oder proportional zu Steuersignalen der Ventilsteuerung eingestellt werden. Da die Fluidsteuerventile bei dieser Ausführungsform während des normalen Betriebszustands des Fluidsystems eine große Anzahl von Lastspielen, also Schaltvorgängen zwischen den einzelnen Funktionsstellungen, vollziehen und über eine definierte, passive Vorzugslage verfügen, müssen sie hinsichtlich ihrer Auslegung hohe Anforderungen erfüllen, um die für das sichere Arbeitssystem geforderte Sicherheitskategorie zu erfüllen. Bei den Fluidsteuerventilen kann es sich somit je nach Anwendungsfall um Schaltventile, um Parallel- und/oder Reihenschaltungen von Schaltventilen mit identischen oder vorzugsweise unterschiedlichen Strömungswiderständen oder um Proportionalventile handeln.

Bei einer zweiten, alternativen Ausführungsform ist vorgesehen, dass die Fluidsteuerventile als Sperrventile eingesetzt werden, die zusätzlich zu Arbeitsventilen, die von der Steuereinrichtung, gegebenenfalls unter Zwischenschaltung einer Arbeitsventilsteuerung, angesteuert werden, in Fluidleitungen zwischen eine Fluidquelle und den Aktor einschleifbar sind. Dabei dienen die Fluidsteuerventile im Fehlerfall und/oder im Notfall nach Übermittlung eines Überwachungssignals von der Überwachungseinrichtung an die Ventilsteuerung zum Sperren der jeweiligen Fluidleitung. Bei dieser Ausführungsform können mehrere Vorteile zum Tragen kommen. Einerseits sind in jeder mit dem Aktor verbindbaren Fluidleitung wenigstens zwei Ventile, also insbesondere das Arbeitsventil und das Fluidsteuerventil, angeordnet, so dass die im Fehlerfall/Notfall notwendige Unterbrechung des Fluidstroms durch die jeweilige Fluidleitung redundant abgesichert ist. Zudem werden diese in die jeweilige Fluidleitung einschleifbaren Ventile von unterschiedlichen Einrichtungen, vorliegend von der Steuereinrichtung und von der Ventilsteuerung, angesteuert, so dass auch eine steuerungstechnische Redundanz vorliegt. Ferner müssen die als Sperrventile für Notfälle dienenden Fluidsteuerventile nur eine geringe Anzahl von Lastspielen mit der geforderten Zuverlässigkeit erfüllen können und sind damit mit einem geringeren Konstruktions- und Kostenaufwand in die gleiche Sicherheitskategorie wie die übrigen Komponenten des sicheren Arbeitssystems einzuordnen, als dies bei der vorstehend geschilderten ersten Ausführungsform der Fall ist. Bevorzugt ist die Steuereinrichtung für eine bidirektionale Kommunikation, insbesondere über ein Feldbussystem, mit einer übergeordneten Maschinen- oder Prozesssteuerung ausgebildet, die einer identischen oder niedrigeren oder höheren Sicherheitskategorie zuzurechnen ist wie die Steuereinrichtung. Die Maschinen- oder Prozesssteuerung ist für eine Koordination mehrerer Steuereinrichtungen ausgebildet und kommuniziert mit den Steuereinrichtungen über ein Feldbussystem. Gemäß einem zweiten Aspekt wird die Aufgabe der Erfindung mit einem Verfahren zum Betreiben eines Fluidsystems, das nach einem der Vorrichtungsansprüche ausgebildet ist, gemäß Anspruch 8 gelöst. Hierbei sind die folgenden Schritte vorgesehen: Ermitteln des Aktorzustands mit den Sensormitteln und Ausgeben von Sensorsignalen entsprechend dem ermittelten Aktorzustand an die Überwachungseinrichtung, Verarbeiten der Sensorsignale in der Überwachungseinrichtung und Bereitstellen eines Überwachungssignals an die Ventilsteuerung zumindest für die Fälle, dass keine Sensorsignale von den Sensormitteln bereitgestellt werden oder dass fehlerhafte Sensorsignale von den Sensormitteln bereitgestellt werden, Verarbeiten des Überwachungssignals in der Ventilsteuerung, insbesondere in Abhängigkeit von den ermittelten Sensorsignalen, und Ansteuern der Fluidsteuerventile zur Beeinflussung wenigstens eines Fluidstroms an den Aktor, so dass der Aktor einen vorgebbaren, sicheren Zustand einnimmt und/oder beibehält. Hierdurch werden in einer Art Grundfunktionalität des Fluidsystems zumindest die Fehlerfälle erkannt, die auf einer Fehlfunktion der Sensormittel oder auf einer Fehlfunktion des Aktors beruhen. Dabei wird von einer Fehlfunktion der Sensormittel ausgegangen, wenn Sensorsignale von den Sensormitteln in der Überwachungseinrichtung eintreffen, die nicht plausibel sind, beispielsweise ein zeitgleicher Eingang von Sensorsignalen zweier voneinander beabstandet angeordneter Endlagensensoren. Von einer Fehlfunktion der Sensormittel und/oder des Aktors wird ausgegangen, wenn nach Bereitstellung fluidischer Energie an den Aktor innerhalb eines vorgebbaren Zeitraums keine Änderung der Sensorsignale erfolgt oder nach einer anfänglichen Änderung der Sensorsignale innerhalb eines vorgebbaren Zeitraums keine weitere Änderung der Sensorsignale auftritt, wodurch normalerweise das Erreichen einer vorgegebenen Stellung durch den Aktor angezeigt würde. Für diese Fehlerfälle ist vorgesehen, keine weitere fluidische Energie an den Aktor bereitzustellen oder einen Fluidstrom an den Aktor zu unterbrechen, damit dieser entweder einen sicheren Zustand beibehält oder einen sicheren Zustand einnehmen kann.

Bei einer Ausgestaltung des Verfahrens ist vorgesehen, dass die Überwachungseinrichtung elektrische Signale eines Sicherheitsschaltmittels überwacht und bei einem Eingriff oder Zutritt in einen vom Aktor bestimmten Gefährdungsbereich ein entsprechendes Überwachungssignal an die Ventilsteuerung bereitstellt, um die Fluidsteuerventile derart anzusteuern, dass wenigstens ein Fluidstrom an den Aktor derart beeinflusst wird, dass der Aktor einen vorgebbaren, sicheren Zustand einnimmt oder beibehält. Hierdurch wird eine Absicherung eines vom Aktor bestimmten Gefährdungsbereichs, also beispielsweise eines Schwenkbereichs oder eines linearen Verstellbereichs eines Maschinenelements, das mit dem Aktor bewegungsgekoppelt ist, mit Hilfe von Sicherheitsschaltmitteln wie Lichtgittern oder Trittschaltmatten erreicht. Bei einem Eingreifen oder Annähern eines Benutzers oder eines Gegenstands in den abgesicherten Gefährdungsbereich erfolgt aufgrund der dadurch ausgelösten elektrische Signale des Sicherheitsschaltmittels eine Unterbrechung der Zufuhr von fluidischer Energie an den Aktor. Gegebenenfalls kann zusätzlich eine aktive Klemmung des Aktors vorgesehen werden.

Bei einer weiteren Ausgestaltung des Verfahrens ist vorgesehen, dass die Überwachungseinrichtung bei Detektion eines Eingriffs oder Zutritts in einen vom Aktor bestimmten Gefährdungsbereich anhand des Signals des Sicherheitsschaltmittels erst dann ein entsprechendes Überwachungssignal an die Ventilsteuerung bereitstellt, wenn eine bevorstehende Zustandsänderung des Aktors anhand einer Ausgabe eines Steuersignals der Steuereinrichtung und/oder der Ventilsteuerung ermittelt wird und/oder eine Zustandsänderung des Aktors anhand wenigstens einer Änderung eines Sensorsignals von wenigstens einem der Sensormittel erfasst wird. Hierdurch wird bei Fluidsystemen, bei denen der Aktor nur zeitweilig in Bewegung ist, eine Unterbrechung des Arbeitszustands zumindest dann vermieden, wenn der Eingriff oder Zutritt des Benutzers in einem Zeitabschnitt erfolgt, in dem keine Aktorbewegung unmittelbar, also innerhalb eines vorgebbaren Zeitabschnitts, bevorsteht oder stattfindet. Dadurch kann vermieden werden, dass eine Arbeitsmaschine, in die das Fluidsystem mit dem Aktor integriert ist, durch entsprechende Ansteuerung der Fluidsteuerventile unnötig in einen sicheren Zustand gebracht wird, aus dem sie möglicherweise nur unter Schwierigkeiten wie Zeitverlust im Fertigungsablauf und/oder Einbußen beim Materialfluss, wieder in den Arbeitszustand versetzt werden kann. Um diese Funktionsweise des Fluidsystems zu ermöglichen, sind wenigstens eine unidirektionale Kommunikation ausgehend von der Steuereinrichtung zur Überwachungseinrichtung oder eine bidirektionale Kommunikation zwischen der Überwachungseinrichtung und der Ventilsteuerung vorgesehen. In jedem Fall ist die Überwachungseinrichtung derart ausgebildet, dass sie anhand der Steuersignale für die Arbeitsventile und/oder für die Fluidsteuerventile auf eine Bewegung des Aktors zurückschließen kann und nur bei zeitgleichem Vorliegen einer Aktorbewegung und einem Signal des Sicherheitsschaltmittels, das einen Eingriff und/oder Zutritt eines Benutzers in den Gefährdungsraum angibt, ein entsprechendes Überwachungssignal an die Ventileinheit zur Ansteuerung der Fluidsteuerventile und damit zur Blockierung des Aktors ausgibt.

Bei einer weiteren Ausgestaltung des Verfahrens ist vorgesehen, dass die Überwachungseinrichtung die Bereitstellung des Überwachungssignals einstellt, sobald keine Detektion eines Eingriffs oder Zutritts in einen vom Aktor bestimmten Gefährdungsbereich mehr vorliegt und dass die Ventilsteuerung ohne Vorliegen eines Überwachungssignals keine von einer Vorgabe durch die Steuereinrichtung abweichende Ansteuerung der Fluidsteuerventile vornimmt. Hierdurch wird ebenfalls eine unerwünschte Unterbrechung des Arbeitszustands des Fluidsystems verhindert.

Bei einer weiteren Ausgestaltung des Verfahrens ist vorgesehen, dass die Ventilsteuerung die Fluidsteuerventile derart ansteuert, dass wenigstens ein Arbeitsraum im Aktor während des Vorliegens eines entsprechenden Überwachungssignals mit druckbeaufschlagtem Fluid versorgt bleibt. Hierdurch kann je nach Art und Bauweise des Aktors ein vorteilhafter sicherer Ruhezustand für den Aktor erreicht werden, aus dem dieser problemlos, insbesondere sehr rasch und mit nur geringem Energieaufwand, wieder in den Arbeitszustand zurückversetzt werden kann. Beispielsweise kann ein als Fluidzylinder ausgebildeter Aktor im Falle des Auftretens eines Überwachungssignals und der daraus resultierenden Anforderung, möglichst schnell einen bewegungslosen Zustand einzunehmen, entweder vollständig entlüftet werden oder es ist vorgesehen, bei einem doppeltwirkenden Fluidzylinder wenigstens eine der Arbeitskammern oder beide der Arbeitskammern druckbelastet zu belassen. Hierdurch kann der Aktor sich in eine sichere Position bewegen, auch wenn die Fluidzufuhr aus nicht näher dargestellten Gründen unterbrochen ist. Vorzugsweise kann bei einer neuerlichen Inbetriebnahme des Fluidsystems allein durch Entlüften der einen Arbeitskammer eine Bewegung des Aktors hervorgerufen werden, ohne dass hierzu zwingend eine Fluidzufuhr zum Aktor notwendig ist.

Bei einer weiteren Ausgestaltung des Verfahrens ist vorgesehen, dass die Überwachungseinrichtung elektrische Signale eines Bedienerschaltmittels überwacht und das Überwachungssignal an die Ventilsteuerung in Abhängigkeit von den ermittelten Signalen des Bedienerschaltmittels anpasst. Bei dem Bedienerschaltmittel kann es sich entweder um einen Wahlschalter für eine Betriebsart des Fluidsystems handeln, mit dem beispielsweise eine Anwahl eines Arbeitszustands, eines Wartungszustands und eines Ruhezustands vorgenommen wird, oder es handelt sich um einen Notaus- bzw. Nothalt-Schalter, der bei Betätigung durch den Benutzer eine möglichst rasche Stilllegung des Aktors und des damit gekoppelten Fluidsystems bewirken soll. Bei einer Ausbildung des Bedienerschaltmittels als Wahlschalter kann die Überwachungseinrichtung derart konfiguriert werden, dass der vom Benutzer angewählte Betriebszustand des Fluidsystems zum nächsten günstigen Zeitpunkt, beispielsweise nach Durchlaufen eines vom Fluidsystem unterstützten Arbeitszyklus eingestellt wird. Hierzu kann die Überwachungseinrichtung, insbesondere im Rahmen einer bidirektionalen Kommunikation mit der Steuereinrichtung, zunächst eine Analyse über die noch bis zum Ende des Arbeitszyklus zu durchlaufenden Arbeitsschritte durchführen und dann zum gegebenen Zeitpunkt ein Überwachungssignal an die Steuereinrichtung und gegebenenfalls auch an die Ventilsteuerung ausgeben, um nach Beendigung des Arbeitszyklus ein neuerliches Starten eines weiteren Arbeitszyklus zu unterbinden, bis dies vom Benutzer in entsprechender Weise am Bedienschaltmittel vorgegeben wird. Bei einer Ausgestaltung des Bedienerschaltmittels als Notaus- bzw. Nothalt-Schalter werden die Steuereinrichtung und/oder die Ventilsteuerung bei Vorliegen eines entsprechenden Bediensignals eine schnellstmögliche Stilllegung des Aktors bewirken.

Bei einer weiteren Ausgestaltung des Verfahrens ist vorgesehen, dass Steuersignale der Ventilsteuerung, die zur Ansteuerung der Fluidsteuerventile dienen und Sensorsignale der Sensormittel, die am Aktor ermittelt werden, in der Überwachungseinrichtung verarbeitet werden, um eine Überprüfung des sicheren Arbeitssystems zu ermöglichen. Hierbei werden von der Überwachungseinrichtung Plausibilitätsüberprüfungen für unterschiedlichen Steuersignale der Ventilsteuerung sowie für die Sensorsignale der Sensormittel durchgeführt, um eventuelle Fehlfunktionen dieser Komponenten des sicheren Arbeitssystems feststellen zu können und gegebenenfalls bei Vorliegen einer Fehlfunktion eine sichere Abschaltung des Fluidsystems herbeiführen zu können.

Bei einer weiteren Ausgestaltung des Verfahrens ist vorgesehen, dass die Ventilsteuerung oder das sichere Arbeitssystem zum Erreichen des sicheren Zustands eine Ansteuerung der Fluidsteuerventile derart vornimmt, dass Fluidströme an den wenigstens einen Aktor derart beeinflusst werden, dass der Aktor innerhalb einer vorgebbaren Zeitspanne in wenigstens einen vorgebbaren Funktionszustand aus der Gruppe: Aktor druckfrei; Fluidströme vom und/oder zum Aktor gestoppt; Bewegungsrichtungsvorgabe für Aktor; Aktor auf Stillstand geregelt; Aktor auf Vorgegebene Kraft geregelt; Druck im Aktor begrenzt; Aktorklemmung aktiviert; Bewegungsgeschwindigkeit des Aktors begrenzt; gebracht wird. Der Funktionsumfang für die Ventilsteuerung oder das sichere Arbeitssystem umfasst somit sowohl die sogenannten "Basiszustände" als auch optionale Funktionszustände, so dass bei Auftreten eines Fehlers zunächst versucht werden kann, den jeweiligen Aktor in einen optionalen Funktionszustand zu bringen, um eventuelle Folgeschäden für die mit dem Fluidsystem ausgerüstete Anlage und/oder das vom Aktor beeinflusste Werkstück und/oder den Bediener der Anlage zu vermeiden, die aus einer sofortigen Stilllegung des Fluidsystems resultieren könnten.

Bei einer weiteren Ausgestaltung des Verfahrens ist vorgesehen, dass von der Ventilsteuerung oder dem sicheren Arbeitssystem eine zeitliche Abfolge von wenigstens zwei Funktionszuständen vorgegeben wird.

Eine vorteilhafte Ausführungsform der Erfindung ist in der Zeichnung dargestellt. Hierbei zeigt:
- Figur 1: eine schematische Darstellung einer ersten Ausführungsform eines Fluidsystems für eine Arbeitsmaschine, das ein sicheres Arbeitssystem umfasst und
- Figur 2: eine schematische Darstellung einer zweiten Ausführungsform eines Fluidsystems für eine Arbeitsmaschine, das ein sicheres Arbeitssystem umfasst.

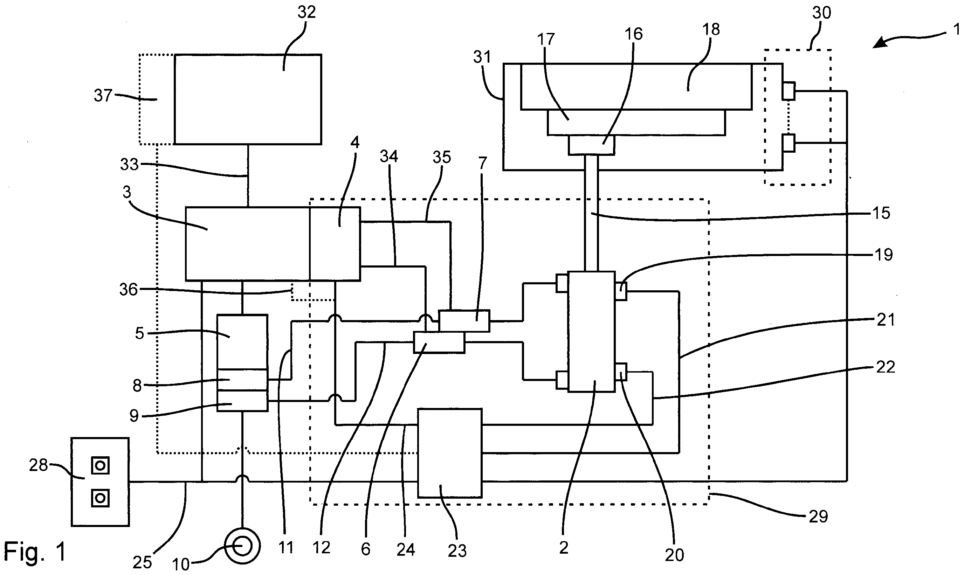

Die Figur 1 zeigt eine erste Ausführungsform eines Fluidsystems 1, das Bestandteil einer nicht näher dargestellten Arbeitsmaschine ist und das zum sicheren Betreiben eines fluidisch ansteuerbaren Aktors 2 ausgebildet ist.

Das Fluidsystem 1 umfasst eine Steuereinrichtung 3, die zur Bereitstellung von Steuersignalen an eine Ventilsteuerung 4 und an eine Arbeitsventilsteuerung 5 ausgebildet ist. Die Ventilsteuerung 4 ist zur Ansteuerung von Fluidsteuerventilen 6, 7 ausgebildet. Die Arbeitsventilsteuerung 5 ist zur Ansteuerung von Arbeitsventilen 8, 9 ausgebildet. Exemplarisch ist vorgesehen, dass die Arbeitsventile 8, 9 mit einer Fluidquelle 10 sowie über Fluidleitungen 11, 12 mit dem Aktor 2 gekoppelt sind. Dementsprechend sind die Arbeitsventile 8, 9 für eine Beeinflussung von Fluidströmen zwischen der Fluidquelle 10 und den exemplarisch zwei, nicht näher dargestellten Arbeitsräumen des Aktors 2 ausgebildet. Je nach Bereitstellung von druckbeaufschlagtem Fluid an eine oder beide Arbeitskammern des Aktors 2 kann ein exemplarisch als Stellglied des Aktors 2 ausgeführte Kolbenstange 15 linear zwischen zwei nicht näher eingezeichneten Endstellungen bewegt oder gegebenenfalls in einer Zwischenstellung zwischen den beiden Endstellungen festgelegt werden. Beispielhaft ist die Kolbenstange 15 endseitig mit einem Stempel 16 versehen, mit dem ein Werkstück 17 an einem Tisch 18 festgelegt werden kann, um an dem Werkstück 17 nicht näher dargestellte Arbeitsvorgänge durchführen zu können. Bei der vorliegenden Ausführungsform gemäß der Figur 1 sind die beiden Fluidsteuerventile 6, 7 als Sperrventile in die Fluidleitungen 11, 12 eingeschleift und können individuell auf Anforderung durch die Ventilsteuerung eine Fluidströmung in der jeweiligen Fluidleitung unterbrechen. Hierdurch kann eine Bewegung der Kolbenstange 15 des Aktors 2 rasch unterbunden werden.

Am Aktor 2 sind vorliegend zwei exemplarisch als Endlagenschalter, insbesondere als Hall-Sensoren, ausgebildete Sensormittel 19, 20 angeordnet, die jeweils ein Sensorsignal über eine Sensorleitung 21, 22 an eine Überwachungseinrichtung 23 ausgeben, wenn sich der nicht näher dargestellte Kolben des Aktors 2 und die Kolbenstange 15 in einer der beiden linearen Endlagen befinden.

Die Überwachungseinrichtung 23 ist über eine Signalleitung 24 mit der Ventilsteuerung 4 und über eine Signalleitung 25 mit einem als Wahlschalter für eine Betriebsart des Fluidsystems 1 ausgebildeten Bedienerschaltmittel 28 verbunden. Über die Signalleitung 24 kann die Überwachungseinrichtung 23 ein Überwachungssignal an die Ventilsteuerung 4 bereitstellen. Über die Signalleitung 25 kann ein Auswahlsignal vom Bedienerschaltmittel 28 an die Überwachungseinrichtung 23 bereitgestellt werden.

Die Steuereinrichtung 3, die Arbeitsventilsteuerung 5 und die Arbeitsventile 8, 9 sind vorliegend gemäß einer ersten Sicherheitskategorie eines Sicherheitsstandards ausgebildet. Die Ventilsteuerung 4, die Fluidsteuerventile 6, 7, die Sensormittel 19, 20 und die Überwachungseinrichtung 23 bilden ein sicheres Arbeitssystem 29, das gemäß einer zweiten Sicherheitskategorie des Sicherheitsstandards ausgebildet sind. Dabei ist vorgesehen, dass die zweite Sicherheitskategorie des sicheren Arbeitssystems 29 innerhalb des Sicherheitsstandards auf einem höheren Niveau als die erste Sicherheitskategorie, die für die Steuereinrichtung 3, die Arbeitsventilsteuerung 5 und die Arbeitsventile 8, 9 vorgesehen ist, angesiedelt ist. Dementsprechend weist das sichere Arbeitssystem 29 eine geringere Ausfallwahrscheinlichkeit als die Steuereinrichtung 3 auf.

Die Überwachungseinrichtung 23 ist ferner mit einem Sicherheitsschaltmittel in Form eines Lichtgitters 30 gekoppelt, das zur Absicherung eines vom Aktor 2, der Kolbenstange 15 und dem daran angebrachten Stempel 16 sowie dem Tisch 18 bestimmten Gefährdungsbereichs 31 vorgesehen ist. Das Lichtgitter 30 ist derart ausgebildet, dass es zumindest für den Fall, dass ein nicht dargestellter Benutzer oder ein Werkstück 17 während des Betriebs des Fluidsystems 1 das Lichtgitter 30 durchbricht, ein Signal ausgibt, das von der Überwachungseinrichtung 23 verarbeitet werden kann und das gegebenenfalls zur Stilllegung des Aktors 2 führt. Damit dient das Lichtgitter 30 als Zugangsbegrenzung in Form einer Zugangsüberwachung.

Während eines regulären störungsfreien Arbeitszustands des Fluidsystems 1 und der damit ausgerüsteten Arbeitsmaschine ist vorgesehen, dass die Steuereinrichtung 3 Steuersignale an die Arbeitsventilsteuerung 5 ausgibt, um eine programmgemäße Ansteuerung der Arbeitsventile 8, 9 zu bewirken.

Dabei kann vorgesehen sein, dass die Steuereinrichtung 3 die Steuersignale autark erzeugt, also ohne Steuerbefehle von einer übergeordneten Maschinensteuerung 32 zu benötigen, gegebenenfalls ohne mit der Maschinensteuerung 32 verbunden zu sein. Alternativ kann die Steuereinrichtung 3 unter Einbeziehung von Steuerbefehlen der Maschinensteuerung 32, mit der die Steuereinrichtung 3 über ein Bussystem 33, das einen bidirektionalen Datenaustausch ermöglicht, verbunden ist, Steuersignale erzeugen.

Durch die Bereitstellung der Steuersignale an die Arbeitsventilsteuerung 5 erfolgt die Ansteuerung der Arbeitsventile 8, 9 und dadurch eine Beaufschlagung wenigstens einer der Fluidleitungen 11, 12 mit druckbeaufschlagtem Fluid. Das druckbeaufschlagte Fluid wird dabei von der Fluidquelle 10 bereitgestellt. In Abhängigkeit von der Druckbeaufschlagung der Fluidleitungen 11, 12 findet exemplarisch eine Stellbewegung der Kolbenstange 15 des Aktors 2 zwischen zwei Endpositionen statt, wobei in jeder der beiden Endpositionen das zugeordnete Sensormittel 19, 20 ein Sensorsignal über die Sensorleitungen 21, 22 an die Überwachungseinrichtung übertragen kann, sobald der nicht dargestellte, mit der Kolbenstange 15 verbundene Kolben des Aktors 2 die jeweilige Endposition erreicht hat.

Die Ventilsteuerung 4, die mit den Fluidsteuerventilen 6, 7, mit der Steuereinrichtung 3 und mit der Überwachungseinrichtung 23 verbunden ist, stellt ohne ein Vorliegen eines von der Überwachungseinrichtung 23 bereitstellbaren Überwachungssignals lediglich die von der Steuereinrichtung 3 bereitgestellten Steuersignale an die Überwachungseinrichtung 23 zur Verfügung. Eine Ansteuerung der beiden Fluidsteuerventile 6, 7 durch die Ventilsteuerung 4 kann vorgesehen sein, wenn die Fluidsteuerventile 6, 7 exemplarisch als normal geschlossene (NC / normal closed) Schaltventile ausgebildet sind und keine der Fluidströmungen durch die Fluidleitungen 11, 12 von den Fluidsteuerventilen 6, 7 beeinflusst, insbesondere gesperrt, werden soll. In diesem Fall wird eine Sperrwirkung der Fluidsteuerventile 6, 7 allein durch Abschaltung der Ansteuerung erreicht, wodurch die Fluidsteuerventile 6, 7 in die Sperrstellung gelangen.

Die Überwachungseinrichtung 23 überprüft in Kenntnis der Steuersignale der Steuereinrichtung 3, ob die Bewegung der Kolbenstange 15 des Aktors 2 gemäß den bereitgestellten Steuersignalen erfolgt. Hierzu prüft die Überwachungseinrichtung 23, ob sich die Sensorsignale der beiden Sensormittel 19, 20 innerhalb vorgebbarer Zeitabschnitte in der Weise verändern, wie dies aufgrund der Steuersignale zu erwarten ist. Ferner prüft die Überwachungseinrichtung 23, ob vom Lichtgitter 30 ein Signal ausgegeben wird, das eine Durchbrechung des Lichtgitters 30 durch einen Benutzer oder ein Werkstück 17 anzeigt. Sofern die Änderung der Sensorsignale der Sensormittel. 19, 20 innerhalb der vorgegebenen Zeitabschnitte erfolgt und kein Signal vom Lichtgitter 30 vorliegt, stellt die Überwachungseinrichtung 23 einen regulären Betrieb des Fluidsystems 1 fest und gibt wahlweise kein Überwachungssignal oder ein den regulären Betrieb des Fluidsystems 1 anzeigendes Überwachungssignal an die Ventilsteuerung 4 aus.

Sofern die Überwachungseinrichtung 23 anhand der Sensorsignale der Sensormittel 19 ,20 und/oder anhand eines Signals des Lichtgitters 30 feststellt, dass entweder eine Störung in der Bewegung des Aktors 2 und/oder eine Störung der Sensormittel 19, 20 und/oder eine Durchbrechung des Lichtgitters 30 vorliegt, kann die Überwachungseinrichtung 23 ein Überwachungssignal an die Ventilsteuerung 4 ausgeben, das darauf gerichtet ist, dass eine Unregelmäßigkeit im Betrieb des Fluidsystems 1 vorliegt. Dabei kann die Überwachungseinrichtung 23 derart eingerichtet sein, dass sie beim Auftreten von Unregelmäßigkeiten im Fluidsystem 1 unmittelbar ein solches Überwachungssignal an die Ventilsteuerung 4 ausgibt. Alternativ kann die Überwachungseinrichtung 23 dazu eingerichtet sein, nur für den Fall ein Überwachungssignal an die Ventilsteuerung 4 auszugeben, wenn zum Zeitpunkt der Ermittlung einer Unregelmäßigkeit durch die Überwachungseinrichtung 23 eine Bewegung des Aktors 2 erfolgt oder wenn eine Bewegung des Aktors 2 innerhalb eines vorgebbaren Zeitabschnitts vorgesehen ist.

Bei Eintreffen eines Überwachungssignals in der Ventilsteuerung 4 kann die Ventilsteuerung 4 über Steuerleitungen 34, 35 Abschaltbefehle an die Fluidsteuerventile 6, 7 bereitstellen. Die Fluidsteuerventile 6, 7 führen dann unmittelbar nach Eintreffen des jeweiligen Abschaltbefehls eine Sperrung der jeweiligen Fluidleitung 11, 12 durch. Dabei kann wahlweise, insbesondere in Abhängigkeit von der Betriebsweise des Aktors 2, von der Ventilsteuerung 4 entweder die vollständige Sperrung der Fluidleitungen 11, 12 vorgesehen werden oder es erfolgt nur die Sperrung einer der Fluidleitungen 11 oder 12. Alternativ erfolgt eine teilweise Sperrung, welche eine Kraftbegrenzung des Aktors zur Folge hat. Durch die zumindest teilweise Sperrwirkung der Fluidsteuerventile 6, 7 soll eine möglichst rasche und sichere Änderung eines Bewegungszustands des Aktors 2 erreicht werden, um beispielsweise bei einem Eingriff eines Benutzers in den Gefährdungsbereich 31 eine Verletzungsgefahr durch den Aktor 2 und die damit in Wirkverbindung stehenden Komponenten 16, 18 zu reduzieren.

Bei einer bevorzugten Ausführungsform der Erfindung ist vorgesehen, dass das Überwachungssignal von der Überwachungseinrichtung 23 parallel an die Ventilsteuerung 4 und an die Steuereinrichtung 3 bereitgestellt wird, wie dies durch den zusätzlichen Leitungszweig 36 in der Figur 1 dargestellt ist. Hierbei kann vorgesehen sein, dass beim Auftreten von Unregelmäßigkeiten im Fluidsystem 1 und einer dementsprechenden Ausgabe eines Überwachungssignals durch die Überwachungseinrichtung 23 zunächst in der Steuereinrichtung 3 Steuersignale erzeugt werden, die als Gegenreaktion auf die ermittelte Unregelmäßigkeit dienen sollen und die über die Arbeitsventilsteuerung 5 an die Arbeitsventile 8, 9 übertragen werden, um beispielsweise eine rasche Unterbrechung einer Bewegung des Aktors 2 zu bewirken. Erst wenn die Überwachungseinrichtung 23 trotz entsprechender Steuersignale von der Steuereinrichtung 3 an die Arbeitsventile 8, 9 feststellt, dass die wunschgemäße Änderung des Bewegungszustands des Aktors 2 nicht eingetreten ist, wird ein modifiziertes Überwachungssignal ausgegeben, das nunmehr an die Ventilsteuerung 4 gerichtet ist und mit dem dann die Sperrung wenigstens einer der Fluidleitungen 11, 12 bewirkt wird.

Bei der Ausführungsform des Fluidsystems 1 gemäß Figur 1 dienen die Fluidsteuerventile 6, 7 also ausschließlich der Veränderung des Durchflussverhaltens, insbesondere der Sperrung der Fluidleitungen 11, 12 und dies nur dann, wenn von der Überwachungseinrichtung 23 während des Betriebs des Fluidsystems 1 Unregelmäßigkeiten detektiert werden.

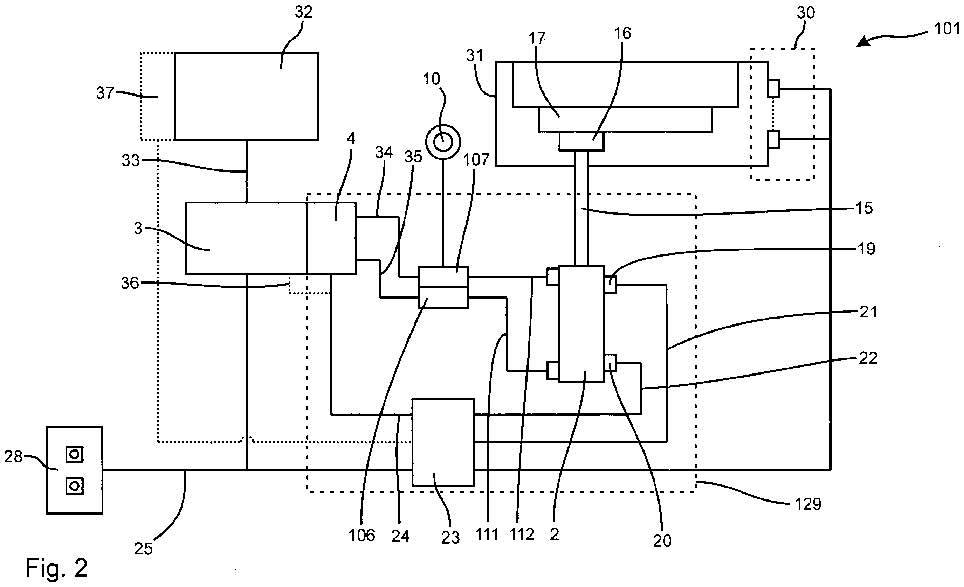

Bei der in Figur 2 dargestellten Ausführungsform eines Fluidsystems 101 sind funktionsgleiche Komponenten mit den gleichen Bezugsziffern versehen wie in der Figur 1. Abweichend von der Ausführungsform gemäß der Figur 1 sind bei der Ausführungsform des Fluidsystems 101 gemäß der Figur 2 die Fluidsteuerventile 106, 107 als einzige Ventile in die jeweiligen Fluidleitungen 111, 112 eingeschleift und stehen mit der Fluidquelle 10 in kommunizierender Verbindung.

Dabei ist die Steuereinrichtung 3 bei der zweiten Ausführungsform des in der Figur 2 dargestellten Fluidsystems 101 wie bei der ersten Ausführungsform des in der Figur 1 dargestellten Fluidsystems 1 gemäß einer ersten Sicherheitskategorie eines Sicherheitsstandards ausgebildet. Die Ventilsteuerung 4, die Fluidsteuerventile 106, 107, die Sensormittel 19, 20 und die Überwachungseinrichtung 23 bilden in Analogie zur ersten Ausführungsform gemäß Figur 1 bei der zweiten Ausführungsform gemäß Figur 2 ein sicheres Arbeitssystem 129, das gemäß einer zweiten Sicherheitskategorie des Sicherheitsstandards ausgebildet sind, die auf einem höheren Niveau als die Sicherheitskategorie der Steuereinrichtung 3 angesiedelt ist.

Bei dem Fluidsystem 101 gemäß Figur 2 werden die Fluidsteuerventile 106, 107 in einer Doppelfunktion genutzt, da sie sowohl im regulären Betrieb des Fluidsystems 101 als auch beim Auftreten von Unregelmäßigkeiten im Fluidsystem 101 zur Beeinflussung der Fluidströme durch die Fluidleitungen 111, 112 dienen. Durch diese Doppelfunktion der Fluidsteuerventile 106, 107 kann auf die Arbeitsventile und die Arbeitsventilsteuerung verzichtet werden. Allerdings sind dadurch auch erheblich höhere Anforderungen an die Fluidsteuerventile 106, 107 zu stellen, damit diese aufgrund der vielfach höheren Lastspielzahlen im Normalbetrieb des Fluidsystems 101 dennoch die Anforderungen derjenigen Sicherheitskategorie erfüllen müssen, in die die Komponenten des sicheren Arbeitssystems 129 eingeordnet sind, und somit bei der Konstruktion und in der Herstellung höhere Kosten hervorrufen. Andererseits ist die Überwachungseinrichtung mit jedem, durch die Steuereinrichtung initiierten Schaltvorgang in der Lage, die korrekte Funktion der Ventilsteuerung und der Fluidsteuerventile zu diagnostizieren, was ebenfalls vorteilhaft für die Einstufung in eine Sicherheitskategorie ist.

Das Fluidsystem 1 und das Fluidsystem 101 können jeweils mit einer übergeordneten Sicherheitsschaltung 37 ausgerüstet sein, die exemplarisch in kommunizierender Verbindung mit der Maschinensteuerung 32 und mit der Überwachungseinrichtung 23 steht. Die Aufgabe der Sicherheitsschaltung 37 besteht darin, sicherheitsrelevante Vorgänge im jeweiligen Fluidsystem 1, 101 zu überwachen, insbesondere unter Ausnutzung der an der Überwachungseinrichtung 23 vorliegenden Sensorsignale. Die Sicherheitsschaltung 37 kann beispielsweise dazu eingerichtet sein, ein Freigabesignal an die Überwachungseinrichtung 23 bereitzustellen, wenn aufgrund der empfangenen Sensorsignale und der Steuersignale, die von der Steuereinrichtung 3 und/oder von der Maschinensteuerung 32 bereitgestellt werden, ein unkritischer zustand des Fluidsystems 1 bzw. 101 vorliegt, in dem beispielsweise ein Eingriff eines Benutzers in den Gefährdungsbereich 31 akzeptiert werden kann, da ohnehin keine Bewegung des Aktors 2 stattfindet oder unmittelbar bevorsteht. Anhand dieses Freigabesignals kann die Ausgabe eines Überwachungssignals von der Überwachungseinrichtung 23 an die Ventilsteuerung 4 vermieden werden, um eine eventuelle ungünstige Beeinflussung des Fluidsystems 1 bzw. 101 zu verhindern, wenn der Benutzereingriff zu einem unkritischen Zeitpunkt erfolgt.

Für beide in den Figuren 1 und 2 dargestellten Ausführungsformen kann vorgesehen werden, dass für eine Abschaltung des Aktors 2 bzw. eine Überführung des Aktors in einen sicheren Zustand von der Fluidversorgung ein optionaler Funktionszustand angestrebt wird, um eine in manchen Fällen unvorteilhafte Komplettabschaltung des jeweiligen Aktors 2 und daraus resultierende Folgeschäden vermeiden zu können. Ergänzend oder alternativ kann auch vorgesehen werden, dass für eine Abschaltung des Aktors 2 bzw. eine Überführung des Aktors in einen sicheren Zustand eine Abfolge mehrerer Basiszustände vorgesehen wird.

## Patentansprüche

1. Fluidsystem zum sicheren Betreiben eines fluidisch ansteuerbaren Aktors (2), mit einer Steuereinrichtung (3) zur Bereitstellung von Steuersignalen an eine Ventilsteuerung (4), mit einer Ventilsteuerung (4) zur Ansteuerung von Fluidsteuerventilen (6, 7; 106, 107), mit Fluidsteuerventilen (6, 7; 106, 107), die elektrisch mit der Ventilsteuerung (4) verbunden sind und die zur Beeinflussung von Fluidströmen an wenigstens einen Aktor (2) ausgebildet sind, mit Sensormitteln (19, 20), die zur Ermittlung eines Aktorzustands, insbesondere einer Aktorstellung, und zur Ausgabe von Sensorsignalen entsprechend dem ermittelten Aktorzustand ausgebildet sind, sowie mit einer Überwachungseinrichtung (23), die zur Verarbeitung der Sensorsignale und zur Bereitstellung eines Überwachungssignals an die Ventilsteuerung (4) ausgebildet ist, **dadurch gekennzeichnet, dass** die Steuereinrichtung (3) gemäß einer ersten Sicherheitskategorie eines Sicherheitsstandards ausgebildet ist und dass die Ventilsteuerung (4), die Fluidsteuerventile (6, 7; 106, 107), die Sensormittel (19, 20) und die Überwachungseinrichtung (23) ein sicheres Arbeitssystem (29; 129) bilden und gemäß einer zweiten Sicherheitskategorie des Sicherheitsstandards ausgebildet sind, wobei die zweite Sicherheitskategorie auf einem höheren Niveau als die erste Sicherheitskategorie innerhalb des Sicherheitsstandards angesiedelt ist.

2. Fluidsystem nach Anspruch 1, **dadurch gekennzeichnet, dass** die Überwachungseinrichtung (23) elektrisch mit einem Sicherheitsschaltmittel (30) verbunden ist und für eine Einbeziehung eines Sicherheitssignals des Sicherheitsschaltmittels (30) in das Überwachungssignal ausgebildet ist, wobei das Sicherheitsschaltmittel (30) als Zugangsbegrenzung und/oder Zugangsüberwachung zu einem vom Aktor (2) bestimmten Gefährdungsbereich (31), insbesondere als Lichtgitter oder als Trittschaltmatte oder als Türkontakt einer Wartungstür in einem Sicherheitskäfig, ausgebildet ist.

3. Fluidsystem nach Anspruch 1 oder 2, **dadurch gekennzeichnet, dass** die Überwachungseinrichtung (23) elektrisch mit einem Bedienerschaltmittel (28) und/oder mit einer Sicherheitsschaltung (37) verbunden ist und für eine Einbeziehung eines Bediensignals des Bedienerschaltmittels (28) und/oder eines Freigabesignals der Sicherheitsschaltung (37) in das Überwachungssignal ausgebildet ist, wobei das Bedienerschaltmittel (28) als Wahlschalter für eine Betriebsart des Fluidsystems (1; 101) ausgebildet ist und wobei die Sicherheitsschaltung (37) als Überwachungssystem, das gegebenenfalls auch Steuerfunktionen ausführen kann, für das Fluidsystem (1; 101) ausgebildet ist.

4. Fluidsystem nach Anspruch 2 oder 3, **dadurch gekennzeichnet, dass** die Steuereinrichtung (3) elektrisch mit dem Sicherheitsschaltmittel (30) und/oder mit dem Bedienerschaltmittel (28) verbunden ist und für eine Einbeziehung eines Signals des Sicherheitsschaltmittels (30) und/oder des Bedienerschaltmittels (28) bei der Erzeugung von Steuerbefehlen an eine Arbeitsventilsteuerung (5) zu Ansteuerung von Arbeitsventilen (8, 9), die mit dem Aktor (2) verbindbar sind und/oder an die Ventilsteuerung (4) ausgebildet ist.

5. Fluidsystem nach einem der vorhergehenden Ansprüche, **dadurch gekennzeichnet, dass** die Ventilsteuerung (4) oder das sichere Arbeitssystem (29; 129) dazu eingerichtet ist, die Fluidsteuerventile (6, 7; 106, 107) derart anzusteuern, dass Fluidströme an den wenigstens einen Aktor (2) derart beeinflusst werden, dass der Aktor (2) innerhalb einer vorgebbaren Zeitspanne in wenigstens einen vorgebbaren Funktionszustand aus der Gruppe: Aktor (2) druckfrei; Fluidströme vom und/oder zum Aktor (2) gestoppt; Bewegungsrichtungsvorgabe für Aktor (2); Aktor (2) auf Stillstand geregelt; Aktor (2) auf vorgegebene Kraft geregelt; Druck im Aktor (2) ungeregelt begrenzt; Aktorklemmung aktiviert; Bewegungsgeschwindigkeit des Aktors (2) begrenzt; bringbar ist.

6. Fluidsystem nach Anspruch 5, **dadurch gekennzeichnet, dass** die Ventilsteuerung (4) oder das sichere Arbeitssystem (29; 129) dazu eingerichtet ist, eine zeitliche Abfolge von wenigstens zwei Funktionszuständen vorzugeben.

7. Fluidsystem nach einem der vorhergehenden Ansprüche, **dadurch gekennzeichnet, dass** die Fluidsteuerventile (6, 7; 106, 107) für eine Fluidsteuerung des Aktors (2) als Schaltventile (106, 107) zwischen eine Fluidquelle (10) und den Aktor (2) einschleifbar sind oder stromauf oder stromab von Arbeitsventilen (8, 9), die von der Steuereinrichtung (3) ansteuerbar sind, als Sperrventile (6, 7) zwischen die Fluidquelle (10) und den Aktor (2) einschleifbar sind, um eine Stellbewegung eines Stellglieds (15) des Aktors (2) in eine vorgebbare Schaltstellung oder einen Verbleib des Stellglieds (15) des Aktors in der vorgebbaren Schaltstellung zu gewährleisten und/oder dass die Steuereinrichtung (3) für eine bidirektionale Kommunikation, insbesondere über ein Feldbussystem (33), mit einer übergeordneten Maschinen- oder Prozesssteuerung (32) ausgebildet ist, die einer identischen oder niedrigeren oder höheren Sicherheitskategorie zuzurechnen ist wie die Steuereinrichtung (3).

8. Verfahren zum Betreiben eines fluidsystems nach einem der vorhergehenden Ansprüche, **gekennzeichnet durch** die Schritte: Ermitteln des Aktorzustands mit den Sensormitteln (19, 20) und Ausgeben von Sensorsignalen entsprechend dem ermittelten Aktorzustand an die Überwachungseinrichtung (23), Verarbeiten der Sensorsignale in der Überwachungseinrichtung (23) und Bereitstellen eines Überwachungssignals an die Ventilsteuerung (4) zumindest für die Fälle, dass keine Sensorsignale von den Sensormitteln (19, 20) bereitgestellt werden oder dass fehlerhafte Sensorsignale von den Sensormitteln (19, 20) bereitgestellt werden, Verarbeiten des Überwachungssignals in der Ventilsteuerung (4), insbesondere in Abhängigkeit von den ermittelten Sensorsignalen, und Ansteuern der Fluidsteuerventile (6, 7; 106, 107) zur Beeinflussung wenigstens eines Fluidstroms an den Aktor (2), so dass der Aktor (2) einen vorgebbaren, sicheren Zustand einnimmt und/oder beibehält.

9. Verfahren nach Anspruch 8, **dadurch gekennzeichnet, dass** die Überwachungseinrichtung (23) elektrische Signale eines Sicherheitsschaltmittels (30) überwacht und bei einem Eingriff oder Zutritt in einen vom Aktor (2) bestimmten Gefährdungsbereich (31) ein entsprechendes Überwachungssignal an die Ventilsteuerung (4) bereitstellt, um die Fluidsteuerventile (6, 7; 106, 107) derart anzusteuern, dass wenigstens ein Fluidstrom an den Aktor (2) derart beeinflusst wird, dass der Aktor (2) einen vorgebbaren, sicheren Zustand einnimmt und/oder beibehält.

10. Verfahren nach Anspruch 9, **dadurch gekennzeichnet, dass** die Überwachungseinrichtung (23) bei Detektion eines Eingriffs oder Zutritts in einen vom Aktor (2) bestimmten Gefährdungsbereich (31) anhand des Signals des Sicherheitsschaltmittels (30) erst dann ein entsprechendes Überwachungssignal an die Ventilsteuerung (4) bereitstellt, wenn eine bevorstehende Zustandsänderung des Aktors (2) anhand einer Ausgabe eines Steuersignals der Steuereinrichtung (3) und/oder der Ventilsteuerung (4) ermittelt wird und/oder eine Zustandsänderung des Aktors (2) anhand wenigstens einer Änderung eines Sensorsignals von wenigstens einem der Sensormittel (18, 19) erfasst wird.

11. Verfahren nach Anspruch 10, **dadurch gekennzeichnet, dass** die Überwachungseinrichtung (23) die Bereitstellung des Überwachungssignals einstellt, sobald keine Detektion eines Eingriffs oder Zutritts in einen vom Aktor (2) bestimmten Gefährdungsbereich (31) mehr vorliegt und dass die Ventilsteuerung (4) ohne Vorliegen eines Überwachungssignals keine von einer Vorgabe durch die Steuereinrichtung (3) abweichende Ansteuerung der Fluidsteuerventile (6, 7; 106, 107) vornimmt.

12. Verfahren nach Anspruch 8, 9 oder 10, **dadurch gekennzeichnet, dass** die Ventilsteuerung (4) die Fluidsteuerventile (6, 7; 106, 107) derart ansteuert, dass wenigstens ein Arbeitsraum im Aktor (2) während des Vorliegens eines entsprechenden Überwachungssignals mit druckbeaufschlagtem Fluid versorgt bleibt.

13. Verfahren nach Anspruch 8, **dadurch gekennzeichnet, dass** die Überwachungseinrichtung (23) elektrische Signale eines Bedienerschaltmittels (28) überwacht und das Überwachungssignal an die Ventilsteuerung (4) in Abhängigkeit von den ermittelten Signalen des Bedienerschaltmittels (28) anpasst.

14. Verfahren nach einem der Ansprüche 9 bis 13, **dadurch gekennzeichnet, dass** Steuersignale der Ventilsteuerung (4), die zur Ansteuerung der Fluidsteuerventile (6, 7; 106, 107) dienen und Sensorsignale der Sensormittel (19, 20), die am Aktor (2) ermitteln werden, in der Überwachungseinrichtung (23) verarbeitet werden, um eine Überprüfung der Funktionsfähigkeit des sicheren Arbeitssystems (29; 129) zu ermöglichen und/oder dass die Ventilsteuerung (4) oder das sichere Arbeitssystem (29; 129) zum Erreichen des sicheren Zustands eine Ansteuerung der Fluidsteuerventile (6, 7; 106, 107) derart vornimmt, dass Fluidströme an den wenigstens einen Aktor (2) derart beeinflusst werden, dass der Aktor (2) innerhalb einer vorgebbaren Zeitspanne in wenigstens einen vorgebbaren Funktionszustand aus der Gruppe: Aktor (2) druckfrei; Fluidströme vom und/oder zum Aktor (2) gestoppt; Bewegungsrichtungsvorgabe für Aktor (2); Aktor (2) auf Stillstand geregelt; Aktor (2) auf vorgegebene Kraft geregelt; Druck im Aktor (2) begrenzt; Aktorklemmung aktiviert; Bewegungsgeschwindigkeit des Aktors (2) begrenzt; gebracht wird.

15. Verfahren nach Anspruch 14, **dadurch gekennzeichnet, dass** von der Ventilsteuerung (4) oder dem sicheren Arbeitssystem (29; 129) eine zeitliche Abfolge von wenigstens zwei Funktionszuständen vorgegeben wird.

## Claims

1. Fluid system for the safe operation of a fluidically controllable actuator (2), the system comprising a control device (3) for the provision of control signals to a valve control (4), further comprising a valve control (4) for the control of fluid control valves (6, 7; 106, 107), further comprising fluid control valves (6, 7; 106, 107), which are electrically connected to the valve control (4) and designed for influencing fluid flows to the at least one actuator (2), further comprising sensor means (19, 20), which are designed for detecting an actuator state, in particular an actuator position, and for outputting sensor signals corresponding to the detected actuator state, and further comprising a monitoring device (23), which is designed for processing the sensor signals and for providing a monitoring signal to the valve control (4), **characterised in that** the control device (3) is designed in accordance with a first safety category of a safety standard, and **in that** the valve control (4), the fluid control valves (6, 7; 106, 107), the sensor means (19, 20) and the monitoring device (23) form a safe working system (29; 129) and are designed in accordance with a second safety category of the safety standard, the second safety category being at a higher level than the first safety category within the safety standard.

2. Fluid system according to claim 1, **characterised in that** the monitoring device (23) is electrically connected to a safety switching means (30) and designed for including a safety signal of the safety switching means (30) into the monitoring signal, wherein the safety switching means (30) is designed as a device for limiting and/or monitoring the access to a hazard area (31) determined by the actuator (2), in particular as a light curtain or as a pressure mat or as a door contact of a service door in a safety cage.

3. Fluid system according to claim 1 or 2, **characterised in that** the monitoring device (23) is electrically connected to an operator switching means (28) and/or to a safety circuit (37) and is designed for including an operating signal of the operator switching means (28) and/or an enable signal of the safety circuit (37) into the monitoring signal, wherein the operator switching means (28) is designed as a control for an operating mode of the fluid system (1; 100), and wherein the safety circuit (37) is designed as a monitoring system, possibly capable of control functions, for the fluid system (1; 100).

4. Fluid system according to claim 2 or 3, **characterised in that** the control device (3) is electrically connected to the safety switching means (30) and/or to the operator switching means (28) and is designed for including a signal of the safety switching means (30) and/or of the operator switching means (28) when generating control commands to a working valve control (5) for the control of working valves (8, 9) connectable to the actuator (2) and/or to the valve control (4).

5. Fluid system according to any of the preceding claims, **characterised in that** the valve control (4) or the safe working system (29; 129) is configured for controlling the fluid control valves (6, 7; 106, 107) in such a way that fluid flows to the at least one actuator (2) are influenced in such a way that the actuator (2) can be moved, within a presettable period of time, into at least one presettable functional state from the group of: actuator (2) pressureless; fluid flows to and/or from actuator (2) stopped; movement direction target for actuator (2); actuator (2) controlled to standstill; actuator (2) controlled to preset force; pressure in actuator (2) limited without control; actuator clamping activated; movement speed of actuator (2) limited.

6. Fluid system according to claim 5, **characterised in that** the valve control (4) or the safe working system (29; 129) is configured for presetting a chronological sequence of at least two functional states.

7. Fluid system according to any of the preceding claims, **characterised in that** the fluid control valves (6, 7; 106, 107) can be looped as switching valves (106, 107) for a fluid control of the actuator (2) between a fluid source (10) and the actuator (2) or looped as check valves (6, 7) upstream or downstream of working valves (8, 9) controllable by the control device (3) between the fluid source (10) and the actuator (2), in order to ensure a control movement of a control element (15) of the actuator (2) into a presettable switching position or a staying of the control element (15) of the actuator into a presettable switching position, and/or that the control device (3) is designed for a bidirectional communication, in particular via a field bus system (33), with a higher-order machine or process control system (32) assignable to an identical or lower or higher safety category than the control device (3).

8. Method for operating a fluid system according to any of the preceding claims, **characterised by** the steps of: the detection of the actuator state with the sensor means (19, 20) and the outputting of sensor signals corresponding to the detected actuator state to the monitoring device (23), the processing of the sensor signals in the monitoring device (23) and the provision of a monitoring signal to the valve control (4) at least if no sensor signals are provided by the sensor means (19, 20) or if erroneous sensor signals are provided by the sensor means (19, 20), the processing of the monitoring signal in the valve control (4), in particular as a function of the detected sensor signals, and the control of the fluid control valves (6, 7; 106, 107) for influencing at least one fluid flow to the actuator (2), so that the actuator (2) adopts and/or maintains a presettable safe state.

9. Method according to claim 8, **characterised in that** the monitoring device (23) monitors electric signals of a safety switching means (30) and, if a hazard area (31) determined by the actuator (2) is accessed, provides a corresponding monitoring signal to the valve control (4) in order to control the fluid control valves (6, 7; 106, 107) in such a way that at least one fluid flow to the actuator (2) is influenced in such a way that the actuator (2) adopts and/or maintains a presettable safe state.

10. Method according to claim 9, **characterised in that** the monitoring device (23), if an access to a hazard area (31) determined by the actuator (2) is detected, only provides a corresponding monitoring signal to the valve control (4) using the signal of the safety switching means (30) if an imminent state change of the actuator (2) is detected from an output of a control signal of the control device (3) and/or the valve control (4), and/or if a state change of the actuator (2) is detected from at least one change of a sensor signal of at least one of the sensor means (18, 19).

11. Method according to claim 10, **characterised in that** the monitoring device (23) ceases to provide the monitoring signal as soon as an access to a hazard area (31) determined by the actuator (2) is no longer detected, and **in that**, in the absence of a monitoring signal, the valve control (4) does not control the fluid control valves (6, 7; 106, 107) in a manner deviating from a target value of the control device (3).

12. Method according to claim 8, 9 or 10, **characterised in that** the valve control (4) controls the fluid control valves (6, 7; 106, 107) in such a way that at least one working chamber in the actuator (2) continues to be supplied with pressurised fluid in the presence of a corresponding monitoring signal.

13. Method according to claim 18, **characterised in that** the monitoring device (23) monitors electric signals of an operator switching means (28) and adapts the monitoring signal to the valve control (4) as a function of the detected signals of the operator switching means (28).

14. Method according to any of claims 9 to 13, **characterised in that** control signals of the valve control (4) used for controlling the fluid control valves (6, 7; 106, 107) and sensor signals of the sensor means (19, 20) detected at the actuator (2) are processed in the monitoring device (23) in order to facilitate a check of the functionality of the safe working system (29; 129), and/or **in that** the valve control (4) or the safe working system (29; 129), for reaching the safe state, controls the fluid control valves (6, 7; 106, 107) in such a way that fluid flows to the at least one actuator (2) are influenced in such a way that that the actuator (2) is moved, within a presettable period of time, into at least one presettable functional state from the group of: actuator (2) pressureless; fluid flows to and/or from actuator (2) stopped; movement direction target for actuator (2); actuator (2) controlled to standstill; actuator (2) controlled to preset force; pressure in actuator (2) limited; actuator clamping activated; movement speed of actuator (2) limited.

15. Method according to claim 14, **characterised in that** a chronological sequence of at least two functional states is preset by the valve control (4) or the safe working system (29; 129).

## Revendications

1. Système fluidique servant à faire fonctionner de manière fiable un actionneur (2) pouvant être piloté de manière fluidique, comprenant un dispositif de commande (3) servant à fournir des signaux de commande à une commande de soupape (4), comprenant une commande de soupape (4) servant à piloter des soupapes de commande de fluide (6, 7 ; 106, 107), comprenant des soupapes de commande de fluide (6, 7 ; 106, 107), qui sont reliées de manière électrique à la commande de soupape (4) et qui sont réalisées afin d'influencer des flux de fluide au niveau d'au moins un actionneur (2), comprenant des moyens de capteur (19, 20), qui sont réalisés afin de déterminer un état d'actionneur, en particulier une position d'actionneur, et afin d'émettre des signaux de capteur conformément à l'état d'actionneur déterminé, ainsi que comprenant un dispositif de surveillance (23), qui est réalisé afin de traiter les signaux de capteur et afin de fournir à la commande de soupape (4) un signal de surveillance, **caractérisé en ce que** le dispositif de commande (3) est réalisé selon une première catégorie de sécurité d'une norme de sécurité, et que la commande de soupape (4), les soupapes de commande de fluide (6, 7 ; 106, 107), les moyens de capteur (19, 20) et le dispositif de surveillance (23) forment un système de travail (29; 129) fiable et sont réalisés selon une deuxième catégorie de sécurité de la norme de sécurité, dans lequel la deuxième catégorie de sécurité se situe à un niveau plus élevé que la première catégorie de sécurité au sein de la norme de sécurité.

2. Système fluidique selon la revendication 1, **caractérisé en ce que** le dispositif de surveillance (23) est relié de manière électrique à un moyen de commutation de sécurité (30) et est réalisé en vue d'une intégration d'un signal de sécurité du moyen de commutation de sécurité (30) dans le signal de surveillance, dans lequel le moyen de commutation de sécurité (30) est réalisé sous la forme d'une limitation d'accès et/ou de surveillance d'accès à une zone dangereuse (31) définie par l'actionneur (2), en particulier sous la forme d'une barrière lumineuse ou sous la forme d'un tapis de commutation de marche ou sous la forme d'un contact de porte d'une porte de maintenance dans une cage de sécurité.

3. Système fluidique selon la revendication 1 ou 2, **caractérisé en ce que** le dispositif de surveillance (23) est relié de manière électrique à un moyen de commutation d'utilisateur (28) et/ou à un circuit de sécurité (37) et est réalisé en vue d'une intégration d'un signal d'utilisation du moyen de commutation d'utilisateur (28) et/ou d'un signal de déblocage du circuit de sécurité (37) dans le signal de surveillance, dans lequel le moyen de commutation d'utilisateur (28) est réalisé sous la forme d'un commutateur sélectif pour un type de fonctionnement du système fluidique (1 ; 101) et dans lequel le circuit de sécurité (37) est réalisé sous la forme d'un système de surveillance, qui peut exécuter également des fonctions de commande, pour le système fluidique (1 ; 101).

4. Système fluidique selon la revendication 2 ou 3, **caractérisé en ce que** le dispositif de commande (3) est relié de manière électrique au moyen de commutation de sécurité (30) et/ou au moyen de commutation d'utilisateur (28) et est réalisé en vue d'une intégration d'un signal du moyen de commutation de sécurité (30) et/ou du moyen de commutation d'utilisateur (28) lors de la génération d'instructions de commande à une commande de soupape de travail (5) servant à piloter des soupapes de travail (8, 9), qui peuvent être reliées à l'actionneur (2), et/ou à la commande de soupape (4).

5. Système fluidique selon l'une quelconque des revendications précédentes, **caractérisé en ce que** le dispositif de soupape (4) ou le système de travail (29 ; 129) fiable est mis au point afin de piloter les soupapes de commande de fluide (6, 7 ; 106, 107) de telle manière que des flux de fluide au niveau de l'au moins un actionneur (2) sont influencés de telle manière que l'actionneur (2) peut être amené, dans un laps de temps pouvant être spécifié, dans au moins un état de fonction pouvant être spécifié choisi parmi le groupe suivant : actionneur (2) sans pression ; flux de fluide depuis et/ou vers l'actionneur (2) stoppés ; spécification de direction de déplacement pour l'actionneur (2) ; actionneur (2) régulé sur arrêt ; actionneur (2) régulé sur une force spécifiée ; pression dans l'actionneur (2) à limitation non régulée ; serrage d'actionneur activé ; vitesse de déplacement de l'actionneur (2) limitée.

6. Système fluidique selon la revendication 5, **caractérisé en ce que** la commande de soupape (4) ou le système de travail (29 ; 129) fiable est mise ou mis au point afin de spécifier une succession dans le temps d'au moins deux états de fonction.

7. Système fluidique selon l'une quelconque des revendications précédentes, **caractérisé en ce que** les soupapes de commande de fluide (6, 7 ; 106, 107) pour une commande de fluide de l'actionneur (2) peuvent être intercalées sous la forme de soupapes de commutation (106, 107) entre une source de fluide (10) et l'actionneur (2) ou peuvent être intercalées en amont ou en aval de soupapes de travail (8, 9), qui peuvent être pilotées par le dispositif de commande (3), sous la forme de soupapes de fermeture (6, 7) entre la source de fluide (10) et l'actionneur (2) afin de garantir un déplacement de réglage d'un organe de réglage (15) de l'actionneur (2) dans une position de commutation pouvant être spécifiée ou un maintien de l'organe de réglage (15) de l'actionneur dans la position de commutation pouvant être spécifiée, et/ou que le dispositif de commande (3) est réalisé en vue d'une communication bidirectionnelle, en particulier par l'intermédiaire d'un système de bus de terrain (33), avec une commande de machine ou de processus (32) maître, qui est à affecter à une catégorie de sécurité identique ou inférieure ou supérieure à celle du dispositif de commande (3).

8. Procédé servant à faire fonctionner un système fluidique selon l'une quelconque des revendications précédentes, **caractérisé par** les étapes suivantes consistant à : déterminer l'état d'actionneur avec des moyens de capteur (19, 20) et émettre de signaux de capteur conformément à l'état d'actionneur déterminé à l'attention du dispositif de surveillance (23) ; traiter les signaux de capteur dans le dispositif de surveillance (23) et fournir un signal de surveillance à la commande de soupape (4) au moins dans les cas où aucun signal de détecteur n'est fourni par les moyens de capteur (19, 20) ou des signaux de capteur erronés sont fournis par les moyens de capteur (19, 20) ; traiter le signal de surveillance dans la commande de soupape (4), en particulier en fonction des signaux de capteur déterminés ; et piloter les soupapes de commande de fluide (6, 7 ; 106, 107) servant à influencer au moins un flux de fluide au niveau de l'actionneur (2) de sorte que l'actionneur (2) adopte et/ou conserve un état pouvant être spécifié, fiable.

9. Procédé selon la revendication 8, **caractérisé en ce que** le dispositif de surveillance (23) surveille des signaux électriques d'un moyen de commutation de sécurité (30) et fournit un signal de surveillance correspondant à la commande de soupape (4) lors d'une intervention ou d'un accès dans ou à une zone dangereuse (31) définie par l'actionneur (2) afin de piloter les soupapes de commande de fluide (6, 7 ; 106, 107) de telle manière qu'au moins un flux de fluide au niveau de l'actionneur (2) est influencé de telle manière que l'actionneur (2) adopte et/ou conserve un état pouvant être spécifié, fiable.

10. Procédé selon la revendication 9, **caractérisé en ce que** le dispositif de surveillance (23) fournit, lors de la détection d'une intervention ou d'un accès dans ou à une zone dangereuse (31) définie par l'actionneur (2), à l'aide du signal du moyen de commutation de sécurité (30), alors seulement un signal de surveillance correspondant à la commande de soupape (4) quand une modification d'état imminente de l'actionneur (2) est déterminée à l'aide d'une émission d'un signal de commande du dispositif de commande (3) et/ou de la commande de soupape (4) et/ou une modification d'état de l'actionneur (2) est détectée à l'aide d'au moins une modification d'un signal de capteur d'au moins un des moyens de capteur (18, 19).

11. Procédé selon la revendication 10, **caractérisé en ce que** le dispositif de surveillance (23) règle la mise à disposition du signal de surveillance dès qu'aucune intervention ou accès dans ou à une zone dangereuse (31) définie par l'actionneur (2) n'est plus détectée ou détecté, et que la commande de soupape (4) ne réalise en l'absence d'un signal de surveillance aucun pilotage des soupapes de commande de fluide (6, 7 ; 106, 107) divergeant d'une spécification par le dispositif de commande (3).

12. Procédé selon la revendication 8, 9 ou 10, **caractérisé en ce que** la commande de soupape (4) pilote de telle manière les soupapes de commande de fluide (6, 7 ; 106, 107) qu'au moins un espace de travail dans l'actionneur (2) reste alimenté en fluide soumis à l'action d'une pression en présence d'un signal de surveillance correspondant.

13. Procédé selon la revendication 8, **caractérisé en ce que** le dispositif de surveillance (23) surveille des signaux électriques d'un moyen de commutation d'utilisateur (28) et adapte le signal de surveillance à la commande de soupape (4) en fonction des signaux déterminés du moyen de commutation d'utilisateur (28).

14. Procédé selon l'une quelconque des revendications 9 à 13, **caractérisé en ce que** des signaux de commande de la commande de soupape (4) qui servent à piloter les soupapes de commande de fluide (6, 7 ; 106, 107) et des signaux de capteur des moyens de capteur (19, 20), qui sont déterminés au niveau de l'actionneur (2), sont traités dans le dispositif de surveillance (23) afin de permettre une surveillance de l'aptitude au fonctionnement du système de travail (29; 129) fiable, et/ou que la commande de soupape (4) ou le système de travail (29; 129) fiable réalise afin d'atteindre l'état fiable un pilotage des soupapes de commande de fluide (6, 7 ; 106, 107) de telle manière que des flux de fluide au niveau de l'au moins un actionneur (2) sont influencés de telle manière que l'actionneur (2) peut être amené, dans un laps de temps pouvant être spécifié, dans au moins un état de fonction pouvant être spécifié choisi parmi le groupe suivant : actionneur (2) sans pression ; flux de fluide depuis et/ou vers l'actionneur (2) stoppés ; spécification de direction de déplacement pour l'actionneur (2) ; actionneur (2) régulé sur arrêt ; actionneur (2) régulé sur une force spécifiée ; pression dans l'actionneur (2) limitée ; serrage d'actionneur activé ; vitesse de déplacement de l'actionneur (2) limitée.

15. Procédé selon la revendication 14, **caractérisé en ce qu'**une succession dans le temps d'au moins deux états de fonction est spécifiée par la commande de soupape (4) ou par le système de travail (29 ; 129) fiable.
